Europäisches Patentamt

European Patent Office

Office européen des brevets

(19)

(11) **EP 1 176 228 A2**

(12) **EUROPÄISCHE PATENTANMELDUNG**

(43) Veröffentlichungstag:
   **30.01.2002 Patentblatt 2002/05**

(51) Int Cl.⁷: **C23C 30/00**

(21) Anmeldenummer: **01117164.2**

(22) Anmeldetag: **14.07.2001**

(84) Benannte Vertragsstaaten:
   **AT BE CH CY DE DK ES FI FR GB GR IE IT LI LU
   MC NL PT SE TR**
   Benannte Erstreckungsstaaten:
   **AL LT LV MK RO SI**

(30) Priorität: **26.07.2000 DE 10036262**

(71) Anmelder: **DaimlerChrysler AG
   70567 Stuttgart (DE)**

(72) Erfinder:
   • **Haug, Tilman, Dr.
     89264 Weissenhorn (DE)**
   • **Scheydecker, Michael
     89278 Nersingen (DE)**
   • **Storz, Oliver
     89134 Blaustein (DE)**
   • **Weisskopf, Karl-Ludwig, Dr.
     73635 Rudersberg (DE)**

(54) **Oberflächenschicht und Verfahren zur Herstellung einer Oberflächenschicht**

(57)    Die Erfindung betrifft eine Oberflächenschicht , die aus mehreren Schichten aufgebaut ist, wovon eine Schicht eine keramische verschleißfeste Schicht ist und eine andere Schicht eine Übergangsschicht zu einem metallischen Trägerelement ist. Die Übergangsschicht setzt sich aus intermetallischen Phasen zusammen und wird durch eine Reaktion aus den Materialien des Trägerelementes und der keramischen Schicht gebildet.

Figur 1

**EP 1 176 228 A2**

**Beschreibung**

Die Erfindung betrifft eine Oberflächenschicht nach dem Patentanspruch 1 und ein Verfahren zur Herstellung einer Oberflächenschicht nach Patentanspruch 6.

Aus der DE 197 50 599 A1 ist ein Konstruktionselement bekannt, das eine $Al_2O_3$-haltige Oberflächenschicht umfasst, die von hochtemperaturbeständigen Aluminiden durchzogen ist. Zur Herstellung eines derartigen Konstruktionselementes wird ein gesinterter, poröser keramischer Körper in eine Druckgußform eingelegt und unter Druck mit Aluminium infiltriert. Während des Infiltrieren reagiert der keramische Körper mit dem Aluminium, wobei die genannten Aluminide gebildet werden. Das Konstruktionselement füllt in der Regel nur Teile des Bauteils aus, weshalb das Bauteil teilweise aus Aluminium und teilweise, insbesondere an den tribologisch belasteten Bauteilbereichen aus dem genannten Konstruktionselement besteht.

Zur Herstellung des Konstruktionselementes nach der DE 197 50 599 A1 muss in aufwendiger Weise ein keramischer Körper geformt, gesintert und bearbeitet werden, bevor er im Druckguß mit Aluminium infiltriert wird. Des Weiteren besteht ein diskreter Übergang zwischen dem Konstruktionselement und dem restlichen Bauteil, das als Trägerelement fungiert, was die Haftung zwischen den genannten Elementen negativ beeinflusst.

Der Erfindung liegt demnach die Aufgabe zu Grunde, eine gegenüber dem Stand der Technik kostengünstigere Oberflächenschicht bereitzustellen, bei der zudem die Haftung zwischen der Oberflächenschicht und einem Trägerelement zu verbessert ist.

Die Aufgabe wird durch eine Oberflächenschicht nach Patentanspruch 1 und durch ein Verfahren zur Herstellung einer Oberflächenschicht nach Patentanspruch 6 gelöst.

Die erfindungsgemäße Oberflächenschicht nach Patentanspruch 1 besteht aus mindestens zwei Teilschichten auf einem metallischen Trägerelement. Dabei ist eine, der Oberfläche zugewandte Schicht im Wesentlichen eine keramische Schicht, eine dem Trägermaterial zugewandte Schicht (Übergangsschicht) enthält hingegen intermetallische Phasen. Diese sind aus dem Metall des Trägerelements und einem, in der keramischen Schicht chemisch gebundenen Metall zusammengesetzt. Die keramische Schicht übernimmt als funktionale Schicht die Aufgabe des Verschleißschutzes oder der Wärmedämmung für das Trägerelement. Die Übergangsschicht setzt sich in Form einer chemischen Bindung aus Materialien des Trägerelements und Materialien der keramischen Schicht zusammen. Auf Grund der chemischen Bindung ist demnach zwischen der keramischen Schicht und dem Trägerelement eine sehr gute Haftung gewährleistet, was insbesondere bei einer Verschleißbeanspruchung der Oberflächenschicht von Bedeutung ist. Die erfindungsgemäße Oberflächenschicht dient als Verschleißschutzschicht und/oder als Wärmedämmschicht für tribologisch und thermisch hochbelastete Metallbauteile, insbesondere im Antriebsstrang von Automobilen, z. B. in einem Zylinderkurbelgehäuse, in einem Zylinderkopf, an Kolben oder in einem Getriebegehäuse. Ebenfalls kann die erfindungsgemäße Oberflächenschicht bei Reibpaarungen, wie z. B. bei Bremseinheiten Verwendung finden.

Eine besonders gute chemische Bindung zwischen der keramischen Schicht und dem Trägermaterial stellt sich ein, wenn die keramische Schicht aus einer oxidischen Keramik besteht, die durch das Metall des Trägerelements reduzierbar ist. Sehr gut geeignet sind insbesondere das Titandioxid ($TiO_2$) und das Siliziumdioxid ($SiO_2$). In diesem Fall bilden sich bevorzugt intermetallische Phasen nach dem Reaktionsschema

$$Me_K O + Me_T \rightarrow Me_K Me_T + Me_T O \qquad Gl. 1$$

aus. Hierbei steht $Me_K$ für das chemisch gebundene Metall der keramischen Schicht, O für Sauerstoff und $Me_T$ für das Metall des Trägerelements. Es ist hierbei möglich, dass das Material der keramischen Schicht ein Mischoxid ist, das mehrere Metalle nach der Art $Me_{K1}Me_{K2}O$ (z. B. Spinelle, Ilmenit oder Silikate) enthält. Stöchiometriekoeffizienten sind in den schematischen Angaben für chemische Verbindungen und Reaktionen nicht berücksichtigt (Anspruch 2).

Besonders bevorzugt besteht die keramische Schicht aus den Oxiden des Titans oder des Siliziums oder Mischungen hieraus. Die hierbei gebildeten intermetallischen Phasen enthalten demnach Titan oder Silizium. Diese beiden Metalle bilden besonders stabile und hochtemperaturbeständige intermetallische Phasen aus, die sehr gute mechanische Eigenschaften aufweisen (Anspruch 3).

Für das Trägerelement werden bevorzugt Legierungen auf der Basis von Aluminium oder Eisen verwendet. Diese Metalle bilden besonders gut intermetallische Phasen mit keramischen Materialien und sind gleichzeitig als Konstruktionswerkstoffe für metallische Bauteile gut geeignet (Anspruch 4).

Ein weiterer Bestandteil der Erfindung ist ein Verfahren zur Herstellung einer Oberflächenschicht nach Patentanspruch 6. Hierbei wird auf ein metallisches Trägerelement eine keramische Schicht aufgebracht. Durch einen Energieeintrag, der entweder während des Aufbringens der Schicht (in situ) oder durch eine nachträgliche Wärmebehandlung erfolgen kann, wird eine Reaktion zwischen dem Metall des Trägerelementes und dem in der Keramik chemisch gebundenen Metall angeregt. Hierbei wird in der Reaktionszone eine Übergangsschicht erzeugt, die intermetallische Phasen und keramische Phasen nach Gl. 1 enthält. Die reaktionsgebundene Übergangsschicht ist sowohl mit dem Trägerelement und der keramischen Schicht fest verbunden, was erfindungsgemäß eine sehr gute Haftung gewährleistet.

Die keramische Schicht läßt sich auf das Trägerelement durch die meisten gängigen Beschichtungsverfahren aufbringen. Hierzu gehören physikalische und chemische Abscheideverfahren, wie Sputtern, Sol-Gel-Prozesse, Galvanisieren oder eine CVD-Beschichtung. Besonders geeignet sind jedoch Lackiertechniken (z. B. Tauchlackieren oder Spritzen) oder Schlickertechniken wie sie bei der Keramikherstellung üblich sind womit eine besonders kostengünstige Schicht erzeugt werden kann. Unter Schlickertechnik wird in diesem Zusammenhang das Aufbringen eine Suspension, die Lösungsmittel und Feststoffe enthält, auf eine Oberfläche verstanden, wobei der aufgebrachten Suspension das Lösungsmittel entzogen wird und eine Schicht bestehen bleibt. Des Weiteren sind Verfahren des thermischen Spritzens wie das Flammspritzen, das Hochgeschwindigkeits-Flammspritzen, das Plasmaspritzen, das Lichtbogen-Drahtspritzen oder das kinetische Kaltgaskompaktieren zweckmäßige Beschichtungsverfahren. Die Verfahren des thermischen Spritzens gewährleisten eine besonders dichte Schicht und sind ebenfalls kostengünstig herstellbar (Anspruch 7).

Ein Energieeintrag, der die Reaktion zwischen dem Trägerelement und der keramischen Schicht anregt, kann insbesondere bei den genannten thermischen Spritzverfahren in situ erfolgen. Dies geschieht, wenn ein keramisches Pulver beim Auftreffen auf das Trägermaterial eine, für einen Reaktionsstart ausreichende Temperatur aufweist. Bei anderen Beschichtungsverfahren wird eine zusätzliche Temperaturbehandlung eingeführt. Die Termperaturbehandlung ist zweckmäßigerweise selektiv, das heißt, nur die mit der keramischen Schicht versehenen Bereiche des Trägerelements werden erwärmt. Dies ist besonders zweckmäßig, da so das Trägerelement keiner zusätzlichen Belastung z. B. durch Korrosion oder Gefügeumwandlung ausgesetzt wird. Für die selektive Beheizung eignen sich besonders konzentrierte Wärmestrahlung (z. B. durch hochenergetische Infrarotlampen), Laserbestrahlung oder Induktionsbeheizung (Anspruch 8).

Die erfindungsgemäße Oberflächenschicht und das erfindungsgemäße Verfahren zur Herstellung der Oberflächenschicht wird in den folgenden Beispielen näher beschrieben.

Es zeigt die einzige Figur den schematischen Aufbau einer Oberflächenschicht, mit einer keramischen Schicht, einer Übergangsschicht und einem Trägerelement.

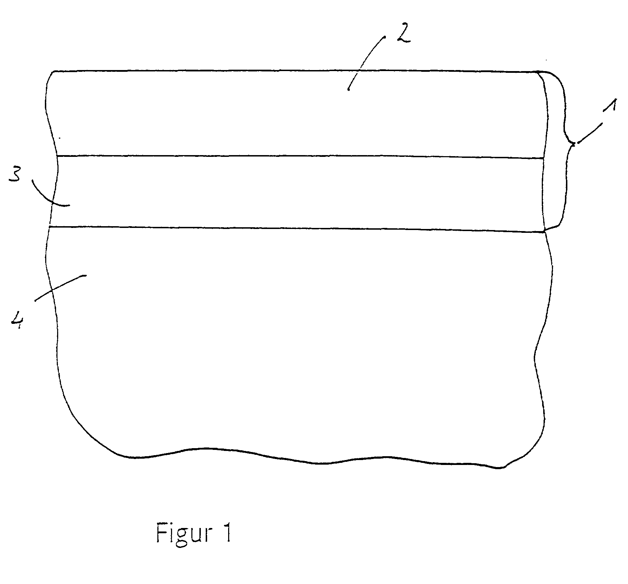

Die in Figur 1 gezeigte Oberflächenschicht 1 enthält eine keramische Schicht 2, eine Übergangsschicht 3 und ein Trägerelement 4. Die keramische Schicht 2 enthält im Wesentlichen Titanoxid ($TiO_2$). Das Trägerelement 4 ist ein Druckgußbauteil und besteht aus der Aluminiumlegierung AlSi9Cu3. Die Übergangsschicht 3 entsteht aus einer Reaktion zwischen der keramischen Schicht und dem Trägerelement und enthält

Titanaluminide ($Al_3Ti$ und $TiAl$), sowie Aluminiumoxid ($Al_2O_3$) und $TiO_2$.

Beispiel 1

Zylinderlaufbahnen eines Zylinderkurbelgehäuses aus der Legierung AlSi9Cu3 werden im Plasmaspritzverfahren mit Titanoxid beschichtet. Die $TiO_2$-Partikel weisen Durchmesser zwischen 10 µm und 50 µm auf. Die Partikel werden im Plasmagas (Argon/Wasserstoff) auf ca. 1800° C erhitzt, schmelzen dabei zumindest partiell auf und treffen im erweichten Zustand auf die Oberfläche der Zylinderlaufbahn. Die hieraus resultierende Schichtdicke beträgt ca. 200 µm.

Die $TiO_2$-Partikel, die sich während des Auftreffens auf der Zylinderlaufbahn im erweichten oder geschmolzenen Zustand befinden, reagieren zumindest teilweise mit der Oberfläche der Zylinderlaufbahn. Hierbei bildet sich die Übergangsschicht 3 nach der Gl. 1 aus. Die Übergangsschicht weist in diesem Fall eine Dicke von ca. 1 µm auf und enthält die Phasen $Al_3Ti$ und Aluminiumoxid sowie in Resten $TiO_2$ und Aluminium. Die Grenzflächen zwischen der keramischen Schicht 2, die aus $TiO_2$ besteht, der Übergangsschicht 3 und dem Trägerelement 4 sind fließend. Die so erzeugte Oberflächenschicht weist eine sehr gut Haftung auf der Zylinderlaufbahn auf findet als Verschleißschutzschicht zwischen einem bewegten Kolben und dem Zylinderkurbelgehäuse Verwendung.

Beispiel 2

Auf die Zylinderlaufbahnen eines Zylinderkurbelgehäuses (AlSi9Cu3) wird eine Siliziumoxid-Suspension ($SiO_2$) auf Wasserbasis aufgespritzt. Das Aufspritzen erfolgt wie bei einem Lackieren mit Hilfe von Luftdruck und einer Spritzpistole. Die gespritzte $SiO_2$-Schicht wird getrocknet und anschließend einer Wärmebehandlung unterzogen. Die Wärmebehandlung erfolgt mittels Infrarotheizstrahler. Der Energieeintrag erfolgt so, dass die Oberflächenschicht konstant auf einer Temperatur zwischen 520° C und 580° C für ca. 5 min gehalten wird. Ein Aufschmelzen des Zylinderkurbelgehäuses findet hierbei nicht statt. Lokal bilden sich hingegen an der Oberfläche der Zylinderlaufbahn entsprechend des Phasendiagramms der Legierung flüssige Phasenbestandteile, die eine Reaktion mit dem $SiO_2$ der keramischen Schicht 2 nach Gl. 1 eingehen. Es bilden sich in der Übergangsschicht 3 Aluminiumsilizide und Aluminiumoxid, in Resten bleiben Aluminium und $SiO_2$ erhalten. Die Dicke der Übergangsschicht beträgt ca. 30 µm

**Patentansprüche**

1. Oberflächenschicht die aus mehreren Schichten besteht, wovon eine Schicht eine Übergangsschicht zu einem Trägerelement ist,
**dadurch gekennzeichnet, dass**

- die Oberflächenschicht eine keramische Schicht umfasst,
- die ein chemisch gebundenes Metall enthält,
- das Trägerelement ein metallisches Trägerelement ist
- und die Übergangsschicht intermetallische Phasen aus dem Metall des Trägermaterials und dem Metall des keramischen Materials enthält.

2. Oberflächenschicht nach Anspruch 1,
**dadurch gekennzeichnet, dass**
die keramische Schicht eine Oxidkeramik umfasst.

3. Oberflächenschicht nach Anspruch 1 oder 2,
**dadurch gekennzeichnet, dass**
das die keramische Schicht eine titanhaltige und/oder siliziumhaltige Oxidkeramik umfasst.

4. Oberflächenschicht nach einem der Ansprüche 1 bis 3,
**dadurch gekennzeichnet, dass**
das Trägermaterial aus einer Legierung auf der Basis von Aluminium und/oder Eisen besteht.

5. Oberflächenschicht nach einem der vorhergehenden Ansprüche,
**dadurch gekennzeichnet, dass**
die Übergangsschicht Aluminiumtitanate und Aluminiumoxid enthält

6. Verfahren zur Herstellung einer Oberflächenschicht, die aus mehreren Schichten besteht, wovon eine Schicht eine Übergangsschicht zu einem Trägerelement ist,
**dadurch gekennzeichnet, dass**

- auf einem metallischen Trägerelement eine keramische Schicht aufgebracht wird,
- durch einen Energieeintrag eine Reaktion zwischen dem Metall des Trägerelementes und der keramischen Schicht erfolgt und
- hierbei die intermetallische Phasen enthaltende Übergangsschicht erzeugt wird.

7. Verfahren nach Anspruch 5,
**dadurch gekennzeichnet, dass**
die keramische Schicht durch ein thermisches Spritzverfahren oder durch eine Schlickertechnik oder durch eine Lackiertechnik aufgebracht wird.

8. Verfahren nach Anspruch 5 oder 6,
**dadurch gekennzeichnet, dass**
der Energieeintrag über eine Infrarotheizquelle und/oder einen Laser und/oder eine Induktionswärmequelle erfolgt.

Figur 1